# FASCICULE DE BREVET EUROPEEN

(11) **EP 3 160 842 B1**
(45) Date de publication et mention de la délivrance du brevet: **04.04.2018**
(21) Numéro de dépôt: 15732264.5
(22) Date de dépôt: 30.06.2015
(51) Int. Cl.: B64C 25/36

(54) **SYSTÈME DE MOTORISATION DE ROUE, NOTAMMENT D'UN AÉRONEF**
RADANTRIEBSSYSTEM, INSBESONDERE FÜR EIN FLUGZEUG
WHEEL DRIVE SYSTEM, IN PARTICULAR FOR AN AIRCRAFT

(30) Priorité: 30.06.2014 FR 1456209
(43) Date de publication de la demande: 03.05.2017
(73) Titulaire: Compagnie Générale des Etablissements Michelin, 63000 Clermont-Ferrand (FR)
(72) Inventeur: ESSINGER, Olivier, F-63040 Clermont-Ferrand Cedex 09 (FR); MARRO, Patrick, F-63040 Clermont-Ferrand Cedex 09 (FR); BLANC, Claude, F-63040 Clermont-Ferrand Cedex 09 (FR)
(74) Mandataire: Roussy, Delphine
(86) Numéro de dépôt international: PCT/EP2015/064782
(87) Numéro de publication internationale: WO 2016/001192

(56) Documents cités:
- WO-A1-2011/073587
- FR-A1- 2 954 236
- FR-A1- 2 972 389
- US-A- 4 659 039

## Description

La présente invention concerne le domaine des aéronefs et notamment les systèmes de motorisation d'une roue lors de la circulation au sol de l'aéronef. Voir Fr2954236 et US4659039 comme état de la technique plus proche. On distingue généralement plusieurs phases de circulation au sol d'un aéronef avant la phase de décollage ou après la phase d'atterrissage : une phase de déplacement à très faible vitesse, par exemple inférieure à 5 km/h, appelée couramment « phase de manoeuvre» destinée à déplacer l'aéronef d'une place de stationnement/stockage à une zone de chargement et une phase de déplacement en marche avant à faible vitesse, par exemple de l'ordre de 20 km/h, appelée couramment en termes anglo-saxon « taxiing ». La phase de manoeuvre peut comprendre un déplacement en marche arrière, par exemple pour sortir d'un bâtiment tel qu'un hangar de stockage et/ou un déplacement en marche avant afin d'arriver à une zone de chargement. Les déplacements lors de la phase de manoeuvre sont réalisés à très faibles vitesses et généralement à l'aide de personnes se trouvant au sol à l'extérieur de l'aéronef.

La phase de manoeuvre en marche arrière et/ou en marche avant à très faible vitesse est généralement réalisée à l'aide d'un véhicule automobile permettant de diriger l'aéronef, tel que par exemple un tracteur dédié appelé « tug » en termes anglo-saxons.

Une solution consiste à associer un moteur électrique à la roue de l'aéronef. Toutefois, la connexion permanente entre la roue et le moteur oblige le moteur électrique à atteindre rapidement une vitesse de rotation élevée lors d'un atterrissage rapide, par exemple à 220 km/h et cela nécessite d'utiliser un moteur électrique capable de supporter une telle vitesse. De plus, du fait de la connexion permanente entre la roue et le moteur, la roue peut être bloquée en cas de blocage du moteur électrique ou des moyens de transmission.

En outre, de tels systèmes ne permettent pas de supporter les déformations de la jambe de suspension et de la roue, notamment lors des différentes phases de manoeuvre et/ou taxiing au sol tel que les virages et/ou freinages de l'aéronef.

On peut se référer au document FR 2 975 340 qui décrit un dispositif d'accouplement en rotation d'une roue dentée de sortie d'un réducteur à une roue d'un aéronef comprenant une pluralité de bielles formant des liaisons rotules respectivement avec la jante de la roue et la roue dentée de sortie.

Toutefois, un tel dispositif d'accouplement ne permet pas au système de motorisation d'adopter une position débrayée dans laquelle le bloc moteur est désaccouplé de la roue, de sorte que lors des phases de roulage à grande vitesse, telle que par exemple l'atterrissage de l'aéronef, le moteur électrique doit être capable de supporter une telle vitesse.

On peut se référer au document EP 2 527 249 qui décrit un mécanisme d'interface débrayable entre un système de motorisation de roue d'un train d'atterrissage d'un avion et une roue comportant un motoréducteur et un système d'embrayage à l'intérieur du motoréducteur. Le mécanisme d'interface comprend une partie tournante entraînée en rotation par le motoréducteur et une partie fixe solidaire de la jante et coopérant de manière permanente avec la partie tournante. L'accouplement entre le motoréducteur et la roue est réalisé par l'engrenage entre un des pignons intermédiaires du motoréducteur et une roue dentée grâce à des systèmes de blocage de la rotation des pignons intermédiaires portés par un élément pendulaire articulé autour de l'axe de rotation du pignon moteur et de butées réglables de la course angulaire de l'élément pendulaire.

Toutefois, un tel système pivotant est particulièrement complexe et ne permet pas non plus de supporter les déformations entre la jambe de suspension et la roue. De plus, un tel système nécessite une coopération permanente entre la partie tournante du mécanisme d'interface et la jante de la roue.

On peut se référer au document WO 2011/073590 qui propose un système de motorisation autonome d'une roue d'un aéronef comprenant un bloc moteur relié de façon pivotante à une partie non suspendue d'une jambe de suspension, un organe d'entraînement, telle qu'une couronne dentée, solidaire de la jante de la roue et un dispositif d'embrayage porté par la jambe de suspension et permettant de relier l'arbre de sortie du bloc moteur à l'organe d'entraînement. Le système d'embrayage permet d'embrayer ou de débrayer le bloc moteur de la roue. Le bloc moteur est mobile par rapport à la roue via l'organe d'entraînement dans une position embrayée lors du déplacement au sol à faible vitesse et débrayée lors de l'atterrissage ou du décollage. Afin de compenser les déformations du train d'atterrissage, un joint homocinétique est disposé entre le pignon de sortie du bloc moteur et l'arbre de sortie du bloc moteur supportant le pignon de sortie.

Toutefois un tel système est complexe à réaliser et nécessite l'utilisation d'une pluralité de bielles montées en rotation sur la partie non suspendue de la jambe de suspension et sur le bloc moteur.

La présente invention a donc pour but de remédier à ces inconvénients.

Plus particulièrement, la présente invention vise à prévoir un système de motorisation de roue, intégré au train d'atterrissage et permettant le déplacement de l'aéronef en phase de manoeuvre et en phase de taxiing, tout en assurant la protection du système de motorisation, par exemple lors de l'atterrissage, du décollage ou des déplacements de l'aéronef à vitesse élevée.

La présente invention a également pour objectif de permettre au système de motorisation de supporter les déformations de la jambe de suspension et de la roue, notamment lors des différentes phases de manoeuvre au sol et de taxiing, tel que les virages et/ou freinages de l'aéronef.

L'invention a pour objet un système de motorisation de roue, pour la circulation au sol d'un aéronef, comprenant un bloc moteur porté par une partie non suspendue d'une jambe de train de l'aéronef et comportant un moteur électrique et des moyens de réduction. Le système de motorisation de roue comprend en outre un dispositif d'embrayage reliant l'arbre de sortie du moteur électrique à la roue par l'intermédiaire des moyens de réduction.

Le dispositif d'embrayage comprend un mécanisme à crabots comportant une partie motrice solidaire du bloc moteur et une partie réceptrice solidaire du pneumatique de la roue, et un système de déplacement en translation, suivant l'axe de la traverse d'essieu de la jambe de train, de la partie motrice dans une position embrayée dans laquelle la partie motrice coopère avec la partie réceptrice et une position débrayée dans laquelle la partie motrice est séparée de la partie réceptrice.

Un tel système de motorisation est solidaire du train d'atterrissage et plus précisément de la traverse d'essieu portant la roue. Il est donc embarqué directement sur l'aéronef.

Dans un mode de réalisation, la partie réceptrice comprend une pluralité de plots d'amortissement en saillie axiale vers la partie motrice. Les plots d'amortissement sont solidaires d'un des flancs latéraux du pneumatique et espacés les uns des autres afin de laisser subsister un espace entre deux plot d'amortissement adjacents.

Les plots d'amortissement sont, par exemple, réalisés en matériau caoutchouc et directement surmoulés sur le flanc latéral du pneumatique.

Les plots d'amortissement peuvent être réalisés en un matériau différent du matériau utilisé pour le pneumatique, notamment au niveau des flancs latéraux. Par exemple, les plots d'amortissement sont réalisés en un matériau présentant une dureté de 35 Shore A.

Dans un mode de réalisation, la partie motrice comprend une partie annulaire ou anneau fixé sur le bloc moteur et une pluralité de doigts d'accouplement ou crabots fixés de manière régulière sur la conférence de l'anneau et destinés à venir s'engager, en position embrayée du système de motorisation de roue, respectivement dans un créneau entre deux plots d'amortissement adjacents de la partie réceptrice.

Dans un mode de réalisation, le système de déplacement en translation comprend une pièce de liaison solidaire du carter de réduction du bloc moteur et montée sur la traverse d'essieu de la jambe de train.

La pièce de liaison peut être montée sur deux axes de guidages solidaires de la jambe de train, notamment de la traverse d'essieu.

A titre d'exemple non limitatif, un des deux axes de guidage peut être cylindrique et le deuxième axe de guidage parallèle au premier peut avoir une forme avec deux surfaces planes orientées judicieusement afin d'éviter une construction hyperstatique et supporter d'autant mieux d'éventuelles variations dimensionnelles, notamment thermiques.

Dans un mode de réalisation, le système de déplacement du dispositif d'embrayage comprend un actionneur électrique fixé sur la jambe de train, notamment sur la traverse d'essieu, et comportant une tige d'actionneur montée par liaison glissière dans l'actionneur et dont une extrémité est fixée à la pièce de liaison.

Le dispositif d'embrayage peut comprendre des moyens de déblocage et blocage en translation permettant de maintenir le système de motorisation de roue dans une position débrayée. Les moyens de déblocage et blocage en translation peuvent être actionnables électriquement. Le blocage en translation peut être actif par manque de courant et par l'utilisation d'un ressort.

Les moyens de déblocage et blocage en translation comprennent, par exemple, un vérin solidaire de la pièce de liaison comprenant un piston, actionné par un électroaimant, dont une première extrémité est reliée au corps de vérin par un ressort de compression et une deuxième extrémité est destinée à venir s'engager dans un logement correspondant sur un des axes de guidage lorsque le système de motorisation de roue est en position de repos non engagée.

Dans un mode de réalisation, les moyens de réduction comprennent un pignon moteur lié à l'arbre de sortie du moteur électrique, un réducteur planétaire, par exemple à au moins deux étages de réduction, entraîné en rotation par le pignon moteur et entraînant en rotation une couronne à denture conique de sortie du réducteur, de grand diamètre, par l'intermédiaire d'un pignon à denture conique de sortie du réducteur. Le pignon à denture conique de sortie du réducteur engrène ainsi avec la couronne à denture conique de sortie de réducteur, permettant un renvoi d'angle, par exemple de 100°.

La partie motrice du dispositif d'embrayage peut être solidaire, de manière permanente, au dernier étage de réduction des moyens de réduction, tel que par exemple la couronne à denture conique de sortie de réducteur. Ainsi, le dispositif d'embrayage est externe au bloc moteur.

L'alimentation du moteur électrique du système de motorisation, ainsi que du système de déplacement et des moyens de déblocage et blocage en translation de la partie motrice dans une position repos non engagée peut se faire au moyen d'une source d'alimentation présente sur l'aéronef, telle qu'une batterie embarquée ou par un générateur auxiliaire de bord de l'aéronef.

Selon un second aspect, l'invention concerne un aéronef comprenant au moins une roue munie d'un système de motorisation de roue tel que décrit précédemment.

Dans un mode de réalisation, l'aéronef comprend au moins un train d'atterrissage pourvu de deux roues dont au moins une roue est munie d'un système de motorisation de roue tel que décrit précédemment.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente une vue en perspective d'une partie d'un train d'atterrissage d'un aéronef équipé de deux roues et d'un système de motorisation de roue selon l'invention ;
- les figures 2 et 3 représentent une vue arrière d'une partie d'un train d'atterrissage selon la figure 1 illustrant le système de motorisation de roue respectivement en position désengagée et engagée avec la roue ;
- la figure 4 représente une vue en perspective d'une roue motorisée ;
- la figure 5 représente une vue en coupe V-V selon la figure 2;
- la figure 6 représente en détail le dispositif d'embrayage du système de motorisation de roue selon l'invention ;
- les figures 7 et 8 représentent des vues en coupe VII-VII et VIII-VIII selon la figure 5 du dispositif d'embrayage en position débrayée et embrayée ;
- la figure 9 représente une vue en coupe IX-IX selon la figure 5 ; et
- la figure 10 représente une vue en coupe montrant en détail la fixation de la partie motrice sur le bloc moteur.

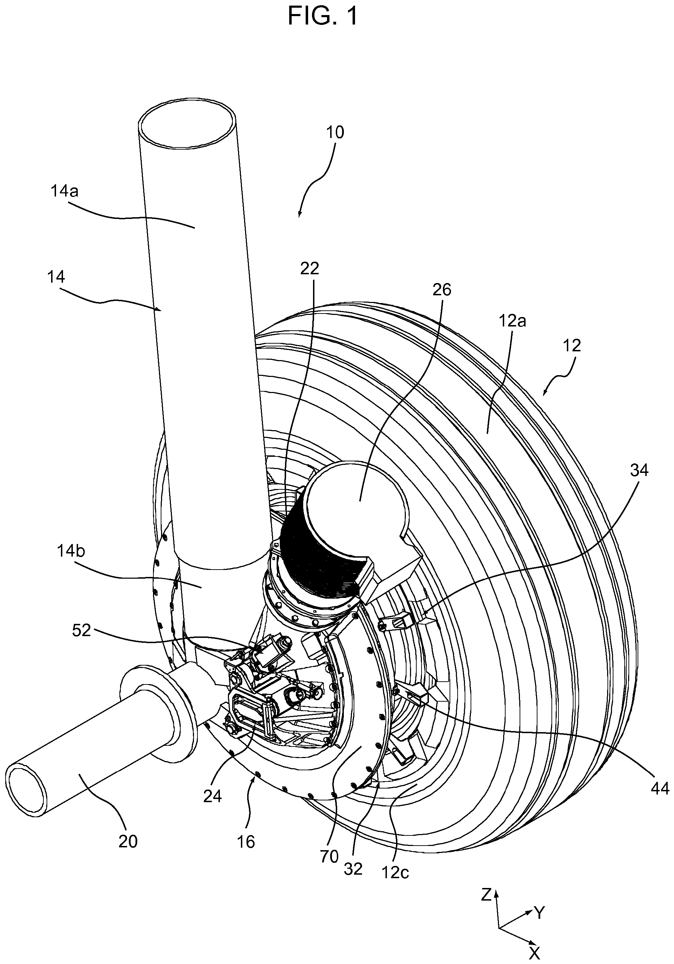

Dans la suite de la description, les termes « longitudinal », « transversal », « vertical », « avant », « arrière », « gauche » et « droite », s'entendent par rapport au repère orthogonal usuel des aéronefs, représenté sur la figure 1, et comprenant :
- un axe longitudinal X, horizontal et dirigé de l'avant vers l'arrière de l'aéronef ;
- un axe transversal Y, horizontal, perpendiculaire à l'axe X et dirigé de droite à gauche de l'aéronef se déplaçant vers l'avant ;
- un axe Z, orthogonal aux axes X et Y et vertical dirigé de bas en haut.

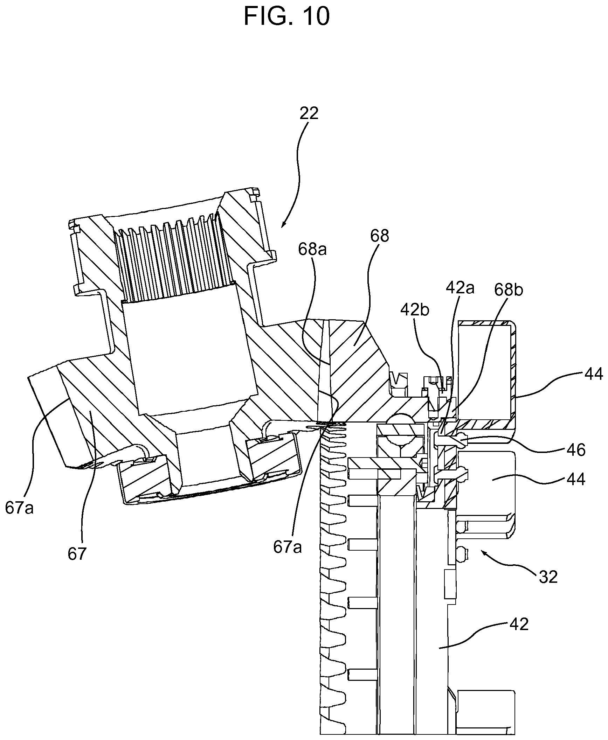

Telle qu'illustrée sur la figure 1, une partie d'un train d'atterrissage d'un aéronef, qui peut être par exemple un avion de ligne, référencée 10 dans son ensemble, comprend deux roues 12 dont une seule est représentée sur les dessins, une jambe de train 14, supportant les roues 12, un système de motorisation 16 d'une des deux roues 12 pour la circulation au sol de l'aéronef et un système de freinage 18 associé à chacune des roues, visibles en détails sur la figure 10. A titre d'exemple non limitatif, le train d'atterrissage peut être un des trains principaux d'un aéronef comportant deux trains d'atterrissages principaux.

La jambe de train 14 comprend une partie suspendue 14a reliée à la structure de l'aéronef et permettant d'absorber l'énergie de l'impact d'atterrissage et les évolutions du sol tout en assurant un maximum de confort pour les passagers à bord de l'aéronef et une partie non suspendue 14b reliée à la partie suspendue et comportant une traverse d'essieu 20 s'étendant suivant l'axe horizontal Y de l'aéronef.

Les deux roues 12 comprennent chacune un pneumatique 12a et une jante 12b insérée dans le pneumatique et montée à rotation sur la traverse d'essieu 20 faisant office de fusée de roue par l'intermédiaire de paliers à roulements (non représentés).

Le système de motorisation de roue 16 est porté par la partie non suspendue 14b de la jambe de train 14 et comprend un bloc moteur 22 et un dispositif d'embrayage 24 destiné à accoupler et désaccoupler l'arbre de sortie du moteur avec une des roues 12.

Le bloc moteur 22 comprend un moteur électrique 26, tel que par exemple un moteur synchrone triphasé à aimants permanents, et des moyens de réduction qui seront décrits en détails en référence à la figure 10. Les moyens de réduction sont logés dans un carter de réduction 28 solidaire d'une pièce de liaison 30 à la traverse d'essieu 20 de la jambe de train 14.

Le dispositif d'embrayage 24 comprend un mécanisme à crabots comportant une partie motrice 32 solidaire du bloc moteur 22 et une partie réceptrice 34 solidaire de la roue 12, notamment du pneumatique 12a.

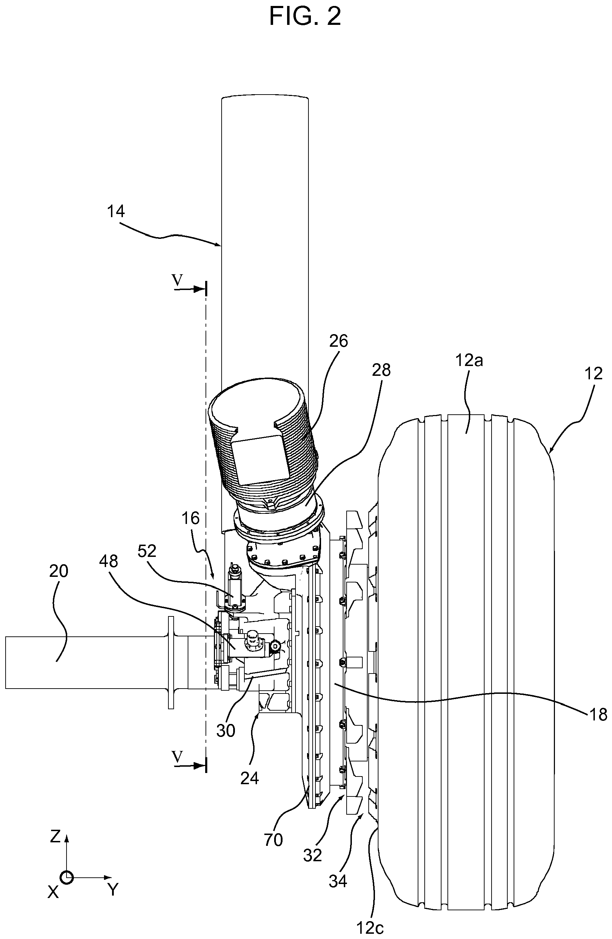

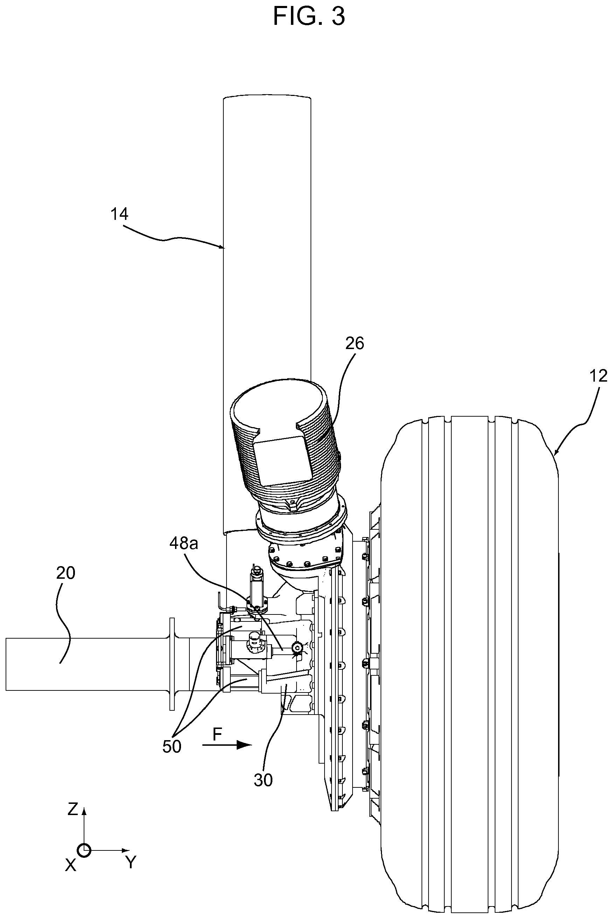

Le dispositif d'embrayage 24 comprend en outre un système de déplacement en translation, suivant l'axe de la traverse d'essieu 20 de la jambe de train 14, de la partie motrice 32 dans une position débrayée ou désengagée, visible sur la figure 2, dans laquelle la partie motrice 32 est séparée de la partie réceptrice 34 et une position embrayée ou engagée, visible sur la figure 3, dans laquelle la partie motrice 32 coopère avec la partie réceptrice 34.

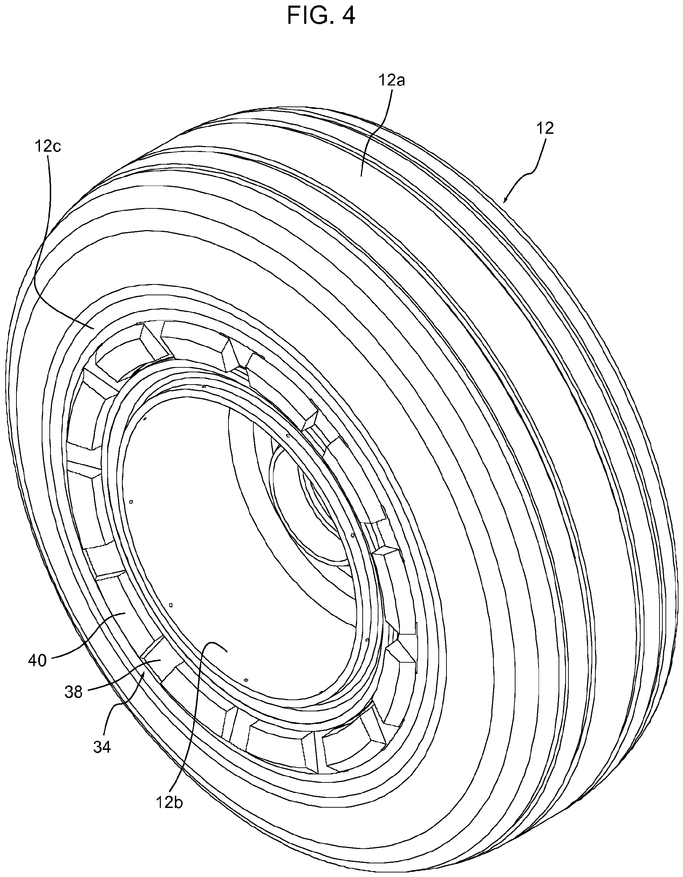

Telle qu'illustrée en détail sur la figure 4, la partie réceptrice 34 comprend une pluralité de plots d'amortissement 40, de forme générale parallélépipédique, disposés de manière régulière sur un des flancs latéraux 12c du pneumatique, tout en laissant subsister un espace ou créneau 38 entre deux plots d'amortissement 40 adjacents.

Les plots d'amortissements se présentent sous la forme de saillies s'étendant axialement depuis un des flancs latéraux 12c du pneumatique 12a vers la partie motrice 32.

Tels qu'illustrés, les plots d'amortissement 40 sont directement surmoulés sur le flanc latéral 12c. Les plots d'amortissement peuvent être réalisés en matériau différent du matériau utilisé pour le pneumatique, notamment en termes de dureté, afin de transmettre le couple de rotation à la roue par contact avec la partie motrice 32.

En effet, les flancs latéraux d'un pneumatique sont généralement réalisés en gomme souple afin de supporter les déformations à chaque tour de roue tout en étant résistante aux chocs. Les plots d'amortissement 40 devront donc présenter une dureté plus importante que la gomme utilisée pour les flancs latéraux. A titre d'exemple non limitatif, les plots d'amortissement peuvent être réalisés en matériau caoutchouc présentant une dureté de 35 Shore A.

Telle qu'illustrée en détail sur la figure 10, la partie motrice 32 comprend un anneau 42 fixé sur le bloc moteur 22 et une pluralité de doigts d'accouplement 44 ou crabots fixés de manière régulière sur la circonférence de l'anneau 42, par des moyens de fixation 46, par exemple par visseries. Chaque doigt d'accouplement 44 comprend une partie de fixation (non référencée) à l'anneau 42 et une partie (non référencée) en saillie axiale, suivant l'axe horizontal Y, vers la partie réceptrice 34 et en saillie radiale vers l'extérieur de la partie motrice 32. Les doigts d'accouplement 44 sont destinés à venir s'engager, en position embrayée du système de motorisation de roue 12, respectivement dans un créneau 38 entre deux plots d'amortissement adjacents 40 de la partie réceptrice 34. Les doigts d'accouplement sont réalisés en matière métallique, telle que par exemple de l'acier.

La rotation du moteur électrique 26 est transmise par contact entre les doigts d'accouplement 44 et les plots d'amortissement 40. En effet, lors de la rotation du moteur électrique 12, chaque doigt d'accouplement 44 appuie sur un côté d'un plot d'amortissement entraînant en rotation la roue 12.

La compression des plots d'amortissement 40 et le glissement des doigts 44 permettent de reprendre les déformations entre la roue 12 et la jambe de train 14. En effet, la déformation des plots d'amortissement 40 supporte les déformations du train d'atterrissage 10 et de la roue 12.

Il est nécessaire de prévoir des créneaux 38 suffisamment grands dans la direction circonférentielle afin de pouvoir recevoir les doigts d'accouplement 44 même lorsque les déformations du train d'atterrissage 10 sont importantes.

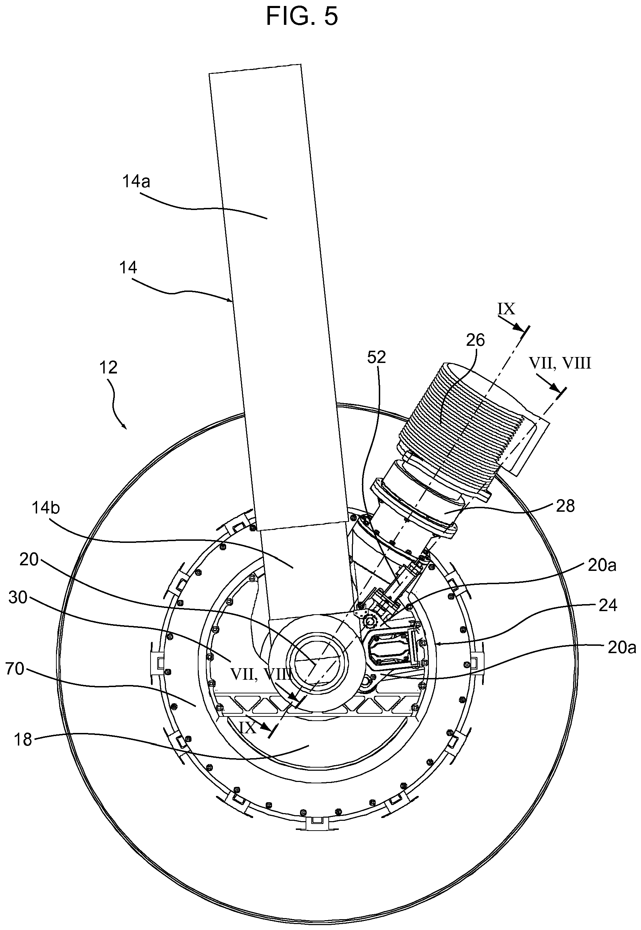

La pièce de liaison 30 fixée à la traverse d'essieu 20 de la jambe de train 14, visible en détail sur la figure 5, présente, de manière nullement limitative, une forme particulière en partie de cercle afin notamment de minimiser son poids.

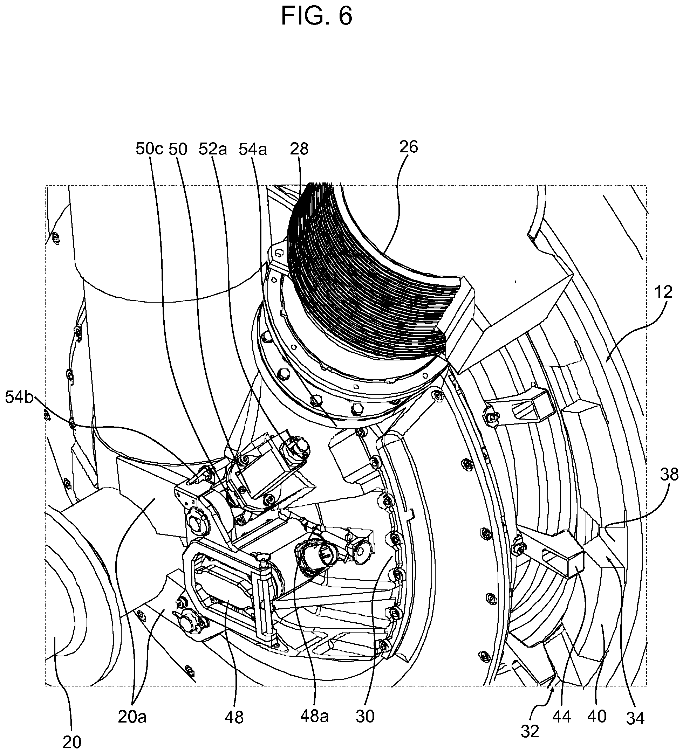

Telle qu'illustrée en détails sur la figure 6, le système de déplacement du dispositif d'embrayage 24 comprend en outre un actionneur électrique 48, actionné à distance, comprenant une tige d'actionneur 48a montée par liaison glissière dans l'actionneur 48 et dont une extrémité est fixée à la pièce de liaison 30. La base de l'actionneur 48 est fixée à deux pattes de fixation 20a de la traverse d'essieu 20. L'actionneur électrique 48 est du type connu et ne sera pas davantage décrit.

Le système de déplacement du dispositif d'embrayage 24 comprend deux axes 50 de guidage en translation, parallèles entre eux, dont chaque extrémité 50a, 50b est fixée respectivement à une patte de fixation 20a de la traverse d'essieu 20, la traverse d'essieu 20 comportant quatre pattes de fixation 20a.

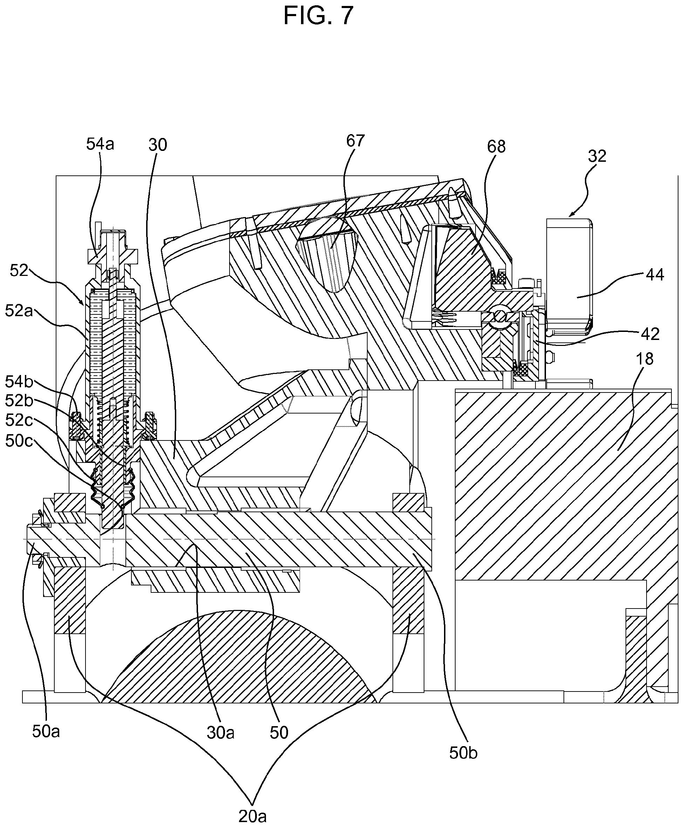

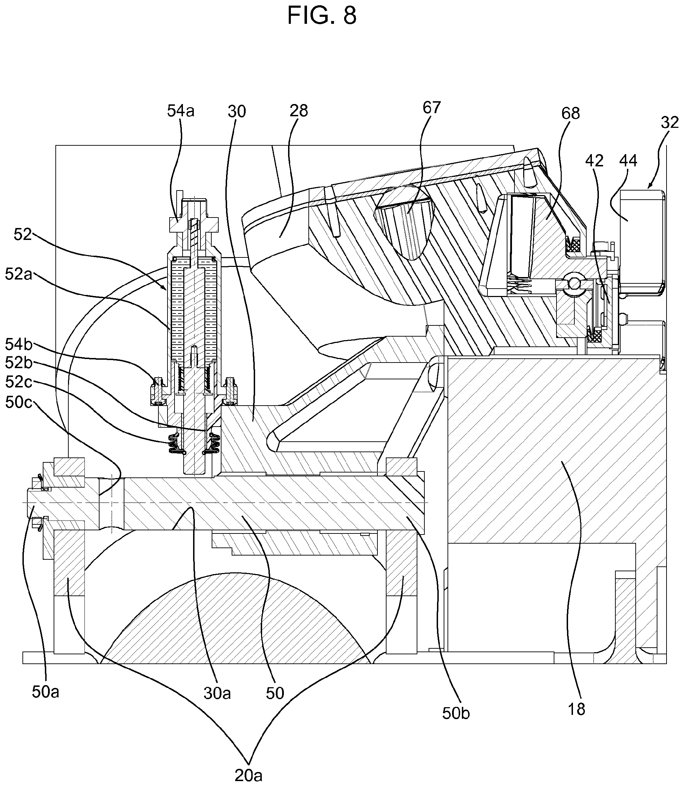

Tel qu'illustré en détails sur les figures 7 et 8, la pièce de liaison 30 comprend deux logements 30a destinés à recevoir chacun un axe de guidage 50 entre deux paliers (non référencés). Ainsi, lorsque la tige d'actionneur 48a se déplace suivant la flèche F, la pièce de liaison 30, dont la rotation est interdite par les deux axes de guidage 50, est mise en mouvement de translation suivant les deux axes de guidage 50 et forme ainsi une liaison glissière avec la traverse d'essieu 20.

La partie motrice 32 étant solidaire de la pièce de liaison 30 par l'intermédiaire du bloc moteur 22, le système de déplacement permet le déplacement en translation, suivant l'axe de la traverse d'essieu 20 de la jambe de train 14, de la partie motrice 32 par rapport à la partie réceptrice 34.

Le dispositif d'embrayage 24 comprend des moyens de déblocage et blocage en translation 52 permettant de maintenir le système de motorisation de roue 12 dans une position débrayée. Les moyens de déblocage et blocage en translation 52 comprennent un vérin 52a solidaire de la pièce de liaison 30 et actionné par un électroaimant (non référencé). Une extrémité du piston 52b du vérin est reliée au corps de vérin par un ressort de compression 52c. Lorsque l'aéronef n'est pas en phase de taxiing, ou qu'il n'y a plus de courant alimentant l'électroaimant, l'extrémité du piston 52b est appuyée contre la surface extérieure de l'axe de guidage supérieur 50. Si le système de motorisation de roue 12 se trouve dans une position débrayée, l'extrémité du piston 52b s'insère dans un perçage 50c correspondant pratiqué dans l'axe de guidage supérieur 50. Ainsi, la pièce de liaison 30 et donc la partie motrice 32 ne peuvent pas se déplacer vers la partie réceptrice 34. Le mécanisme interne au vérin 52a ne sera pas davantage décrit.

Tel qu'illustré, un premier détecteur de position 54a fixé sur le vérin 52a permet de s'assurer que l'extrémité du piston 52b est désengagée de l'axe de guidage supérieur 50 et un deuxième détecteur de position 54b fixé sur le train d'atterrissage 14, par exemple sur une patte de fixation 20a, permet de confirmer la position désengagée de l'extrémité du piston 52b.

L'actionneur 48 et les moyens de déblocage et blocage en translation 52 peuvent être alimentés en énergie électrique par une source d'alimentation interne à l'aéronef, tel que par exemple l'électricité produite, par exemple par le système de génération électrique auxiliaire de l'aéronef ou encore une batterie embarquée ou par toute autre source d'énergie de l'aéronef.

Lors de la phase de taxiing, la partie motrice 32 se déplace à l'aide de l'actionneur 48 du système de déplacement vers la partie réceptrice 34, de manière à permettre l'entraînement en rotation de la roue 12 par le mécanisme à crabots. L'entraînement de la roue 12 est donc complétement désaccouplé pendant les phases de décollage, atterrissage et de vol.

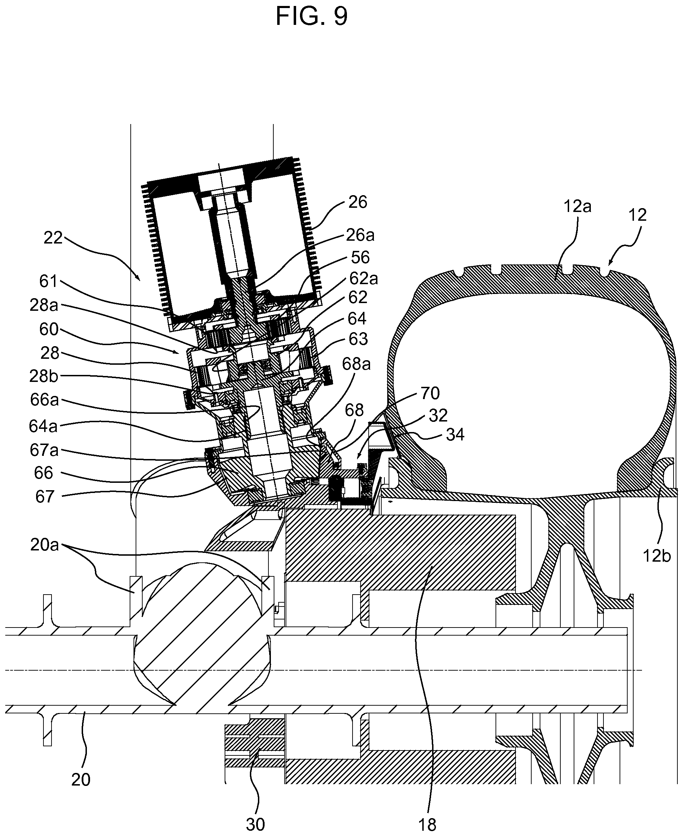

Tel qu'illustré en détail sur la figure 9, les moyens de réduction comprennent un pignon moteur 56 relié à l'arbre de sortie du moteur 26a engrenant avec un réducteur planétaire 60 à deux étages entraînant en rotation une couronne à denture conique par l'intermédiaire d'un pignon à denture conique de sortie du réducteur.

En variante, on pourrait prévoir un nombre inférieur ou supérieur d'étages de réduction entre le pignon moteur et la couronne de sortie du réducteur.

Tel qu'illustré, le réducteur planétaire 60 à deux étages de réduction comprend une pluralité de premiers pignons satellites 61 montés libres en rotation sur des axes (non représentés) dont les extrémités sont solidaires de rainures opposées d'un premier porte-satellites 62. Les premiers pignons satellites 61, par exemple au nombre de trois, engrènent avec le pignon moteur 56 et une première denture intérieure 28a formée dans le carter de réduction 28, qui est immobile en rotation. En variante, on pourrait prévoir une couronne dentée fixée à l'intérieur du carter de réduction et immobilisée en rotation. Ainsi, la rotation du pignon moteur 56 entraîne en rotation le premier porte-satellites 62.

Le réducteur planétaire 60 comprend en outre une pluralité de deuxièmes pignons satellites 63 libres en rotation sur des axes (non représentés) dont les extrémités sont solidaires de rainures opposées d'un deuxième porte-satellites 64 monté à rotation par rapport au premier porte-satellites 62 par l'intermédiaire de paliers à roulements (non référencés). Les deuxième pignons satellites 63, par exemple au nombre de trois, engrènent avec une denture 62a du premier porte-satellites 62 et une deuxième denture intérieure 28b formée dans le carter de réduction 28, qui est immobile en rotation. En variante, on pourrait prévoir une couronne dentée fixée à l'intérieur du carter de réduction. Ainsi, la rotation du premier porte-satellites 62 entraîne la rotation du deuxième porte-satellites 64. Les pignons satellites 61, 63 comprennent, sur leur périphérie, des dentures (non référencées) pouvant être droites ou inclinées.

Le deuxième porte-satellites 64 comprend une cannelure extérieure 64a engrenant avec une cannelure intérieure 66a d'un arbre de sortie 66 du réducteur monté à rotation dans le carter de réduction 28 et portant un pignon à denture conique 67 de sortie du réducteur. Le pignon à denture conique 67 de sortie du réducteur engrène avec une couronne à denture conique 68 de sortie de réducteur, permettant un renvoi d'angle. La couronne à denture conique 68 présente un grand diamètre et est montée dans un carter de couronne 70 par l'intermédiaire d'un palier à roulement de grand diamètre (non référencés). Telle qu'illustrée, la pièce de liaison 30 est fixée sur le carter de couronne 70. Tels qu'illustrés, le pignon et la couronne de sortie de réducteur 67, 68 utilise des dentures coniques. En variante, on pourrait prévoir tout autre type de denture similaire.

Tel qu'illustré, le système de réduction est aligné avec le moteur, de sorte que l'arbre de sortie du moteur 26a, les deux portes-satellites 62, 64 et l'arbre de sortie du réducteur 66 sont coaxiaux. En variante, on pourrait prévoir que le système de réduction ne soit pas aligné avec le moteur.

L'anneau 42 de la partie motrice 32 du dispositif d'embrayage 24 est solidaire, de manière permanente, de la couronne à denture conique 68 de sortie de réducteur, de sorte que la partie motrice 32 est entraînée en rotation par le moteur électrique 26 via les moyens de réduction. Ainsi, le dispositif d'embrayage 24 est externe au bloc moteur 22 puisqu'il est relié au dernier étage de réduction des moyens de réduction du bloc moteur.

Un exemple de fixation de l'anneau 42 de la partie motrice 32 du dispositif d'embrayage 24 à la couronne à denture conique 68 est illustré sur la figure 10. Toutefois, on notera que l'on pourrait prévoir tout autre système de fixation permettant l'accroche de la partie motrice à la couronne à denture conique du bloc moteur.

Tel qu'illustré et de manière nullement limitative, l'anneau 42 comprend une pluralité de pattes de fixation 42a s'étendant radialement vers l'extérieur et disposées de manière à laisser subsister, entre deux pattes adjacentes, un espace de réception d'un plot 68b solidaire de la couronne à denture conique 68. Le maintien axial du plot 68b dans les pattes de réception 42a est réalisé par un moyen de maintien axial 42b fixé sur la couronne à denture conique 68.

Tel qu'illustré sur la figure 9, le système de freinage 18, associé à chacune des roues 12, est solidaire de la traverse d'essieu 20 et monté à rotation par l'intermédiaire de roulements (non représenté) par rapport à la jante 12b de la roue associée 12. On notera que seul le volume alloué au système de freinage 18 a été représenté sur les figures, de sorte que le système de freinage n'est pas détaillé et ne sera pas davantage décrit.

Le procédé de crabotage ou mise en position embrayée du système de motorisation de roue 12 lors de la phase de taxiing s'effectue comme suit :
Initialement, la partie motrice 32 du système d'embrayage 24 se trouve en position repos, c'est-à-dire en position débrayée. Cette position est maintenue par les moyens de déblocage et blocage en translation 52.

Les doigts d'accouplement 44 de la partie motrice 32 sont mis en rotation à une vitesse légèrement différente de la vitesse de rotation de la roue 12, qui peut être fournie, par exemple, par un capteur de vitesse (non représenté). On pourrait prévoir à cet effet, un système d'adaptation de vitesse commandé électroniquement (non représenté), associé au dispositif d'embrayage, permettant de commander la vitesse de rotation du moteur électrique en fonction de la vitesse de rotation mesurée de la roue.

Le couple du moteur électrique 26 est ensuite réglé au minimum, puis les moyens de déblocage et blocage en translation 52 sont actionnés afin de déverrouiller la partie motrice 32 de la position repos, c'est-à-dire afin de rétracter l'extrémité du piston 52b du perçage 50c pratiqué dans l'axe de guidage supérieur 50.

La partie motrice 32 est déplacée, par l'intermédiaire de la pièce de liaison 30, selon la flèche F vers la partie réceptrice 34 solidaire du pneumatique 12a à l'aide de l'actionneur 48.

Dès le contact entre les doigts d'accouplement 44 de la partie motrice 32 et les plots d'amortissement 40 de la partie réceptrice 34, la force de l'actionneur 48 se trouve augmentée, force qui peut être contrôlée à l'aide du pilotage du moteur de l'actionneur.

Grace à la différence entre la vitesse de rotation de la roue et la vitesse de rotation de la partie motrice, les doigts d'accouplement s'engagent progressivement dans les créneaux de la partie réceptrice. La position engagée/embrayée peut être détectée par exemple par le codeur du moteur de l'actionneur.

Grace au mécanisme à crabots, le système de motorisation de roue s'accommode des déformations entre la roue et la jambe de train par des plots élastiques compressibles. L'embrayage/débrayage de la partie motrice avec la partie réceptrice ainsi que la reprise des déformations se font à un unique endroit, au niveau du pneumatique.

Lors des phases de vols autres que les phases de taxiing et de manoeuvre au sol, les parties motrices et réceptrices du dispositif d'embrayage sont complétement séparées l'une de l'autre.

De plus, le système de motorisation s'adapte de manière aisée aux trains d'atterrissage existants, avec peu de modifications.

L'invention s'applique de manière avantageuse à un aéronef comprenant deux roues dont une seule est motorisée par le système de motorisation décrit précédemment. On pourrait prévoir que chaque roue du train d'atterrissage soit munie d'un système de motorisation de roue tel que décrit précédemment. On pourrait également prévoir que le train d'atterrissage de l'aéronef comprenne, en plus de la paire de roues motorisées, deux roues jumelées. Le système de motorisation de roue décrit peut également s'appliquer à un aéronef comprenant une roue munie du système de motorisation de roue. En effet, il est possible de motoriser uniquement un train avant comportant une unique roue ou une paire de roues, appelée généralement « nez » ou « nose » en terme anglo-saxons. On pourrait prévoir que ladite roue motorisée soit directrice, c'est-à-dire qu'elle soit associée à un système d'orientation, tel que par exemple un vérin électrique.

Pour un aéronef comportant au moins un train principal non orientable et un train orientable, la motorisation des roues est de préférence réalisée sur au moins une des roues du train principal. Le train orientable peut, par exemple, être une roulette de queue dont l'orientation peut être bloquée par exemple lors de la phase de taxiing.

## Revendications

1. Système de motorisation de roue, notamment pour la circulation au sol d'un aéronef comprenant :
un bloc moteur (22) porté par une partie non suspendue (14b) d'une jambe de train (14) de l'aéronef et comportant un moteur électrique (26) et des moyens de réduction, et
un dispositif d'embrayage (24) reliant l'arbre de sortie (26a) du moteur électrique (26) à la roue (12) par l'intermédiaire des moyens de réduction, de façon que le dispositif d'embrayage (24) comprend un mécanisme à crabots (32, 34) comportant une partie motrice (32) solidaire du bloc moteur (22) et une partie réceptrice (34) solidaire du pneumatique (12a) de la roue (12), et
un système de déplacement en translation, suivant l'axe de la traverse d'essieu (20) de la jambe de train (14), de la partie motrice (32) dans une position embrayée dans laquelle la partie motrice (32) coopère avec la partie réceptrice (34) et une position débrayée dans laquelle la partie motrice (32) est séparée de la partie réceptrice (34), et **caractérise en ce que** la partie réceptrice (34) comprend une pluralité de plots d'amortissement (40) en saillie axiale vers la partie motrice (32), solidaires d'un flanc latéral (12c) du pneumatique (12a) et espacés les uns des autres afin de laisser subsister un créneau (38) entre deux plots d'amortissement adjacents (40).

2. Système de motorisation de roue selon la revendication 1, dans lequel la partie réceptrice (34) comprend une pluralité de plots d'amortissement (40) en saillie axiale vers la partie motrice (32), solidaires d'un flanc latéral (12c) du pneumatique (12a) et espacés les uns des autres afin de laisser subsister un créneau (38) entre deux plots d'amortissement adjacents (40).

3. Système de motorisation de roue selon la revendication 2, dans lequel les plots d'amortissement (40) sont réalisés en matériau caoutchouc et directement surmoulés sur le flanc latéral (12c) du pneumatique (12a).

4. Système de motorisation de roue selon la revendication 3, dans lequel les plots d'amortissement (40) sont réalisés en matériau différent du matériau utilisé pour le pneumatique.

5. Système de motorisation de roue selon l'une quelconque des revendications 2 à 4, dans lequel la partie motrice (32) comprend un anneau (42) fixé sur le bloc moteur (22) et une pluralité de doigts d'accouplement (44) fixés de manière régulière sur la circonférence de l'anneau (42) et destinés à venir s'engager, en position embrayée du système de motorisation de roue (12), respectivement dans un créneau (38) entre deux plots d'amortissement adjacents (40) de la partie réceptrice (34).

6. Système de motorisation de roue selon l'une quelconque des revendications 1 à 5, dans lequel le système de déplacement en translation comprend une pièce de liaison (30) solidaire du carter de réduction (28) du bloc moteur (22) et montée en translation sur la traverse d'essieu de la jambe de train.

7. Système de motorisation de roue selon la revendication 6, dans lequel la pièce de liaison (30) est montée en translation sur deux axes de guidages (50) solidaires de la jambe de train (14).

8. Système de motorisation de roue selon la revendication 6 ou 7, dans lequel le système de déplacement du dispositif d'embrayage (24) comprend un actionneur électrique (48) fixé sur la jambe de train (14) et comportant une tige d'actionneur (48a) montée par liaison glissière dans l'actionneur et dont une extrémité est fixée à la pièce de liaison (30).

9. Système de motorisation de roue selon l'une quelconque des revendications précédentes, dans lequel le dispositif d'embrayage (24) comprend des moyens de blocage en translation (52) permettant de maintenir le système de motorisation de roue (12) dans une position débrayée.

10. Système de motorisation de roue selon les revendications 9 et 7, dans lequel les moyens de blocage en translation (52) comprennent un vérin (52a), solidaire de la pièce de liaison (30), comprenant un piston (52b), actionnable par un électroaimant, dont une première extrémité est reliée au corps de vérin par un ressort de compression (52c) et une deuxième extrémité est destinée à venir s'engager dans un logement correspondant (50c) sur un des axes de guidage (50) lorsque le système de motorisation de roue (12) est en position de repos non engagée.

11. Système de motorisation de roue selon l'une quelconque des revendications précédentes, dans lequel les moyens de réduction comprennent un pignon moteur (56) lié à l'arbre de sortie (26a) du moteur électrique (26), un réducteur planétaire (60) entraîné en rotation par le pignon moteur (56) et entraînant une couronne à denture conique (68) de sortie du réducteur par l'intermédiaire d'un pignon à denture conique (67) de sortie du réducteur.

12. Système de motorisation de roue selon les revendications 2 et 11, dans lequel la partie motrice (32) du mécanisme à crabots est fixé sur la couronne à denture conique (68) de sortie du réducteur.

13. Système de motorisation de roue selon la revendication 11 ou 12, dans lequel le réducteur planétaire (60) comprend au moins deux étages de réduction.

14. Aéronef comprenant au moins une roue munie d'un système de motorisation de roue selon l'une quelconque des revendications précédentes.

15. Aéronef selon la revendication 14, comprenant au moins un train d'atterrissage pourvu de deux roues dont au moins une roue est munie d'un système de motorisation de roue selon l'une quelconque des revendications 1 à 13.

## Patentansprüche

1. Radantriebssystem, insbesondere für den Verkehr am Boden eines Luftfahrzeugs, aufweisend:
einen Motorblock (22), welcher von einem nicht aufgehängten Teil (14b) eines Fahrwerkbeins (14) des Luftfahrzeugs getragen wird und einen elektrischen Motor (26) und Untersetzungsmittel umfasst, und
eine Kupplungsvorrichtung (24), welche die Abtriebswelle (26a) des Elektromotors (26) mit dem Rad (12) mit Hilfe der Untersetzungsmittel verbindet,
so dass die Kupplungsvorrichtung (24) einen Klauenmechanismus (32, 34) aufweist, welcher einen fest mit dem Motorblock (22) verbundenen, angetriebenen Teil (32) und einen fest mit dem Reifen (12a) der Rades (12) verbundenen, aufnehmenden Teil (34) umfasst, und
ein System zur translatorischen Verschiebung gemäß der Achse der Achstraverse (20) des Fahrwerkbeins (14) des angetriebenen Teils (32) in eine eingerückte Position, in welcher der angetriebene Teil (32) mit dem aufnehmenden Teil (34) zusammenwirkt, und in eine ausgerückte Position, in welcher der angetriebene Teil (32) von dem aufnehmenden Teil (34) getrennt ist, und **dadurch gekennzeichnet, dass** der aufnehmende Teil (34) eine Vielzahl von axial zum angetriebenen Teil (32) vorragenden Dämpfungskissen (40) umfasst, die fest mit einer seitlichen Flanke (12c) des Reifens (12a) verbunden und voneinander beabstandet sind, damit zwischen zwei benachbarten Dämpfungskissen (40) eine Lücke (38) verbleibt.

2. Radantriebssystem nach Anspruch 1, wobei der aufnehmende Teil (34) eine Vielzahl von axial zum angetriebenen Teil (32) vorragenden Dämpfungskissen (40) umfasst, die fest mit einer seitlichen Flanke (12c) des Reifens (12a) verbunden und voneinander beabstandet sind, damit zwischen zwei benachbarten Dämpfungskissen (40) eine Lücke (38) verbleibt.

3. Radantriebssystem nach Anspruch 2, wobei die Dämpfungskissen (40) aus Kautschukmaterial ausgeführt und direkt auf die seitliche Flanke (12c) des Reifens (12a) aufgeformt sind.

4. Radantriebssystem nach Anspruch 3, wobei die Dämpfungskissen (40) aus einem Material ausgeführt sind, das von dem für den Reifen verwendeten Material verschieden ist.

5. Radantriebssystem nach einem der Ansprüche 2 bis 4, bei welchem der angetriebene Teil (32) einen an dem Motorblock (22) befestigten Ring (42) und eine Vielzahl von Kupplungsfingern (44), welche auf gleichmäßige Weise über den Umfang des Rings (42) befestigt und dafür vorgesehen sind, in eingerückter Position des Systems zum Antrieb von Rad (12) jeweils mit einer Lücke (38) zwischen zwei benachbarten Dämpfungskissen (40) des aufnehmenden Teils (34) in Eingriff zu gelangen.

6. Radantriebssystem nach einem der Ansprüche 1 bis 5, bei welchem das System zur translatorischen Verschiebung ein Verbindungsteil (30) aufweist, welches fest mit dem Untersetzungsgehäuse (28) des Motorblocks (22) verbunden und an der Achstraverse des Fahrwerkbeins in Translation montiert ist.

7. Radantriebssystem nach Anspruch 6, bei welchem das Verbindungsteil (30) an zwei Führungsachsen (50), welche fest mit dem Fahrwerksbein (14) verbunden sind, in Translation montiert ist.

8. Radantriebssystem nach Anspruch 6 oder 7, bei welchem das System zur translatorischen Verschiebung der Kupplungsvorrichtung (24) ein elektrisches Betätigungsglied (48) aufweist, welches an dem Fahrwerksbein (14) befestigt ist und eine Betätigungsstange (48a) umfasst, welche über eine Schlittenverbindung in dem Betätigungsglied montiert ist und von welcher ein Ende an dem Verbindungsteil (30) befestigt ist.

9. Radantriebssystem nach einem der vorhergehenden Ansprüche, bei welchem die Kupplungsvorrichtung (24) Mittel zur Blockierung in Translation (52) aufweist, welche es ermöglichen, das System zum Antrieb von Rad (12) in einer ausgerückten Position zu halten.

10. Radantriebssystem nach den Ansprüchen 9 und 7, bei welchem die Mittel zur Blockierung in Translation (52) einen Zylinder (52a) aufweisen, welcher fest mit Verbindungsteil (30) verbunden ist, einen Kolben (52b) aufweist, durch einen Elektromagnet betätigbar ist, von dem ein erstes Ende durch eine Kompressionsfeder (52c) mit dem Zylinderkörper verbunden ist und ein zweites Ende dafür vorgesehen ist, in einer entsprechenden Aufnahme (50c) an einer der Führungsachsen (50) in Eingriff zu gelangen, wenn das System zum Antrieb von Rad (12) in nicht eingerückter Ruheposition ist.

11. Radantriebssystem nach einem der vorhergehenden Ansprüche, bei welchem die Untersetzungsmittel ein Antriebsritzel (56), welches mit der Abtriebswelle (26a) des elektrischen Motors (26) verbunden ist, und ein Planetengetriebe (60) aufweisen, welches von dem Antriebsritzel (56) in Drehung versetzt wird und einen Kranz mit konischer Verzahnung (68) am Ausgang der Untersetzung mit Hilfe eines Kegelzahnrads (67) am Ausgang der Untersetzung antreibt.

12. Radantriebssystem nach den Ansprüchen 2 und 11, bei welchem der angetriebene Teil (32) des Klauenmechanismus an dem Kranz mit konischer Verzahnung (68) am Ausgang der Untersetzung befestigt ist.

13. Radantriebssystem nach Anspruch 11 oder 12, bei welchem das Planetengetriebe (60) mindestens zwei Untersetzungsstufen aufweist.

14. Luftfahrzeug, aufweisend mindestens ein Rad, welches mit einem Radantriebssystem nach einem der vorhergehenden Ansprüche versehen ist.

15. Luftfahrzeug nach Anspruch 14, aufweisend mindestens ein Fahrwerk, welches mit zwei Rädern vorgesehen ist, von denen mindestens ein Rad mit einem Radantriebssystem nach einem der Ansprüche 1 bis 13 versehen ist.

## Claims

1. Wheel drive system, particularly for the ground circulation of an aircraft comprising:
a motor unit (22) borne by an unsuspended part (14b) of a landing gear strut (14) of the aircraft and comprising an electric motor (26) and reduction means, and
a clutch device (24) connecting the output shaft (26a) of the electric motor (26) to the wheel (12) via the reduction means,
so that the clutch device (24) comprises
a dog-clutch mechanism (32, 34) comprising a drive part (32) secured to the motor unit (22) and a receiving part (34) secured to the tyre (12a) of the wheel (12), and
a system for the translational movement, along the axis of the axle crossbeam (20) of the landing gear strut (14), of the drive part (32) into an engaged position in which the drive part (32) collaborates with the receiving part (34) and a disengaged position in which the drive part (32) is separated from the receiving part (34), and
**characterized in that** the receiving part (34) comprises a plurality of shock-absorbing pads (40) projecting axially towards the drive part (32), secured to a lateral sidewall (12c) of the tyre (12a) and spaced apart in such a way as to leave a square-edged slot (38) between two adjacent shock-absorbing pads (40).

2. Wheel drive system according to Claim 1, in which the receiving part (34) comprises a plurality of shock-absorbing pads (40) projecting axially towards the drive part (32), secured to a lateral sidewall (12c) of the tyre (12a) and spaced apart so as to leave a square-edged slot (38) between two adjacent shock-absorbing pads (40).

3. Wheel drive system according to Claim 2, in which the shock-absorbing pads (40) are made of a rubbery material and overmoulded directly onto the lateral sidewall (12c) of the tyre (12a).

4. Wheel drive system according to Claim 3, in which the shock-absorbing pads (40) are made from a material that differs from the material used for the tyre.

5. Wheel drive system according to any one of Claims 2 to 4, in which the drive part (32) comprises an annulus (42) fixed to the motor unit (22) and a plurality of coupling fingers (44) fixed uniformly around the circumference of the annulus (42) and intended to engage, when the wheel drive system (12) is in the engaged position, in a respective square-edged slot (38) between two adjacent shock-absorbing pads (40) of the receiving part (34).

6. Wheel drive system according to any one of Claims 1 to 5, in which the translational movement system comprises a connecting piece (30) secured to the reduction gearbox (28) of the motor unit (22) and mounted in translation on the axle crossbeam of the landing gear strut.

7. Wheel drive system according to Claim 6, in which the connecting piece (30) is mounted in translation on two guide pins (50) secured to the landing gear strut (14).

8. Wheel drive system according to Claim 6 or 7, in which the system for moving the clutch device (24) comprises an electric actuator (48) fixed to the landing gear strut (14) and comprising an actuator rod (48a) mounted via a sliding connection in the actuator and one end of which is fixed to the connecting piece (30).

9. Wheel drive system according to any one of the preceding claims, in which the clutch device (24) comprises means for blocking translational movement (52), allowing the wheel drive system (12) to be kept in a disengaged position.

10. Wheel drive system according to Claims 9 and 7, in which the means for blocking translational movement (52) comprise an actuating cylinder (52a), secured to the connecting piece (30), comprising a piston (52b), that can be actuated by an electromagnet, a first end of which is connected to the actuating cylinder body by a compression spring (52c) and a second end of which is intended to engage in a corresponding housing (50c) on one of the guide pins (50) when the wheel drive system (12) is in the non-engaged position of rest.

11. Wheel drive system according to any one of the preceding claims, in which the reduction means comprise a drive pinion (56) connected to the output shaft (26a) of the electric motor (26), a planetary reduction gearset (60) rotationally driven by the drive pinion (56) and driving a reduction gearset output bevel annulus gear (68) via a reduction gearset output bevel pinion (67).

12. Wheel drive system according to Claims 2 and 11, in which the drive part (32) of the dog-clutch mechanism is fixed to the reduction gearset output bevel annulus gear (68).

13. Wheel drive system according to Claim 11 or 12, in which the planetary reduction gearset (60) comprises at least two reduction stages.

14. Aircraft comprising at least one wheel provided with a wheel drive system according to any one of the preceding claims.

15. Aircraft according to Claim 14, comprising at least one landing gear provided with two wheels of which at least one wheel is equipped with a wheel drive system according to any one of Claims 1 to 13.
